# EUROPEAN PATENT APPLICATION

(11) **EP 4 657 916 A1**
(43) Date of publication of application: **03.12.2025**
(21) Application number: 24755897.6
(22) Date of filing: 19.01.2024
(51) Int. Cl.: H04W 24/02

(54) **COMMUNICATION METHOD AND APPARATUS**

(30) Priority: 15.02.2023 CN 202310162222
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Körber, Martin Hans
(86) International application number: PCT/CN2024/073215
(87) International publication number: WO 2024/169522

(57) **Abstract**

Embodiments of this application provide a communication method and apparatus. The method is applied to model training in the artificial intelligence field. The method includes: A terminal device receives configuration information from a first network device, performs measurement based on the configuration information, to obtain measurement data associated with an AI model, and sends the measurement data to the first network device, so that the first network device can complete training of the AI model based on the measurement data; or the terminal device completes training of the AI model based on the measurement data, and reports a trained model to the first network device. The configuration information is determined based on an optimization requirement for training the AI model of a second network device. According to the solutions of this application, the terminal device can obtain valid measurement data, to support AI model training and improve model training effect.

## Description

This application claims priority to Chinese Patent Application No. 202310162222.2, filed with the China National Intellectual Property Administration on February 15, 2023 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

With improvement of data storage and computing capabilities, an artificial intelligence (artificial intelligence, AI) technology is increasingly used. The AI technology can be applied to a communication system like a new radio (new radio, NR) system to improve network performance and user experience by intelligently collecting and analyzing data.

For different AI models and cells having different engineering parameters (engineering parameters) such as antenna forms, a terminal device collects and reports different measurement information. However, in an actual measurement process, the terminal device may have limited storage due to excessive measurement data collected, or the AI model cannot be effectively trained due to insufficient measurement data collected.

### SUMMARY

Embodiments of this application provide a communication method and apparatus, to support effective training of an AI model by designing appropriate configuration information, and improve model optimization effect.

According to a first aspect, a communication method is provided. The method is applied to a terminal device. The method may be performed by the terminal device, or may be performed by a component (for example, a chip or a circuit) of the terminal device. This is not limited. For ease of description, an example in which the method is performed by the terminal device is used below for description.

The method may include: receiving configuration information from a first network device, where the configuration information is determined based on an optimization requirement for training an AI model of a second network device; performing measurement based on the configuration information, to obtain measurement data associated with an AI model, where the measurement data is used to train the AI model; and sending the measurement data. The first network device and the second network device may be a same network device or different network devices.

The foregoing solution may be applied to a scenario in which the AI model works on the first network device side. The terminal device performs measurement based on the received configuration information, and reports the measurement data for training the AI model. Because the terminal device can obtain valid measurement data through measurement based on the configuration information, a case in which the terminal device occupies too much storage space due to data measurement is avoided, or a case in which the first network device cannot effectively complete model training due to insufficient measurement data is avoided. In addition, determining the configuration information based on the optimization requirement for training the AI model of the second network device can support the second network device to obtain the measurement data of the terminal device through the first network device, to improve model training effect.

With reference to the first aspect, in some implementations of the first aspect, the configuration information includes an expected measurement area range.

According to the foregoing solution, the terminal device can effectively measure a measurement area range in a targeted manner, and can support training of the AI model on a network side.

With reference to the first aspect, in some implementations of the first aspect, the configuration information further includes at least one of the following: range information of a network device that receives the measurement data, an engineering parameter configuration of a target cell, an expected data type, measurement precision, or a source of the configuration information.

According to the foregoing solution, dimensions of measurement data collected by the terminal device can be increased, to obtain more comprehensive and accurate measurement data, so as to support training of the AI model by the first network device. This improves model optimization effect.

With reference to the first aspect, in some implementations of the first aspect, indication information #A from the first network device is received, where the indication information #A indicates the terminal device to perform measurement in any one of the following manners: minimization drive test (minimization drive test, MDT) measurement, mobility robust optimization (mobility robust optimization, MRO) report measurement, and radio resource management (radio resource management, RRM) measurement.

According to the foregoing solution, the indication information #A indicates a measurement manner of the measurement data to the terminal device. For example, in MDT measurement, the terminal device can automatically collect terminal measurement data, to detect and optimize a problem and a fault in a wireless network. In MRO report measurement, generally, after an exception occurs due to movement, random access, or a channel condition change of the terminal device, the terminal device locally records measurement data related to the exception. RRM measurement is measurement of a reference signal. In this way, the terminal device can collect, in a targeted manner, measurement data in different measurement methods.

With reference to the first aspect, in some implementations of the first aspect, indication information #B is received from the first network device, where the indication information #B indicates the terminal device to report the measurement data through the target cell, and the indication information #B includes an identifier of the target cell; or the indication information #B indicates the terminal device to report the measurement data through a target network, and the indication information #B includes an identifier of the target network.

For example, the configuration information carries the range information of the network device that receives the measurement data, including but not limited to the target cell or a target network.

According to the foregoing solution, the terminal device can ensure, based on the indication information #B of the first network device, that the terminal device successfully forwards the measurement data to the first network device through the target cell, the target network, and the like. This avoids leakage of the measurement data of the AI model, and has high security.

With reference to the first aspect, in some implementations of the first aspect, sending the measurement data includes: when the source of the configuration information is the first network device, sending the measurement data and an identifier of the first network device to a third network device, to indicate the third network device to forward the measurement data to the first network device.

For example, the configuration information carries the range information of the network device that receives the measurement data, including but not limited to the third network device.

According to the foregoing solution, in a scenario in which the source of the configuration information is the first network device, the terminal device may obtain the measurement data based on a measurement requirement of the first network device, and successfully forward the measurement data to the first network device through the third network device. This avoids leakage of the measurement data for training the AI model, and has high security

With reference to the first aspect, in some implementations of the first aspect, sending the measurement data includes: when the source of the configuration information is the second network device, sending the measurement data and an identifier of the second network device to a fourth network device, to indicate the fourth network device to forward the measurement data to the second network device.

For example, the configuration information carries the range information of the network device that receives the measurement data, including but not limited to the fourth network device.

According to the foregoing solution, in a scenario in which the source of the configuration information is the second network device, the terminal device may obtain the measurement data based on a measurement requirement of the second network device, and successfully forward the measurement data to the second network device through the fourth network device. This avoids leakage of the measurement data for training the AI model, and has high security.

With reference to the first aspect, in some implementations of the first aspect, sending the measurement data includes: sending the measurement data, the identifier of the first network device, and the identifier of the second network device to a fifth network device. The measurement data includes first data and second data, to indicate the fifth network device to forward the first data to the first network device and forward the second data to the second network device.

For example, the configuration information carries the range information of the network device that receives the measurement data, where the range information of the network device includes but is not limited to the fifth network device.

According to the foregoing solution, the terminal device may uniformly report, to the fifth network device, the measurement data obtained by performing measurement based on the configuration information, and indicate the fifth network device to respectively forward the first data and the second data to the first network device and the second network device. This avoids leakage of the measurement data for training the AI model, and has high security.

According to a second aspect, a communication method is provided. The method is applied to a first network device. The method may be performed by the first network device, or may be performed by a component (for example, a chip or a circuit) of the first network device. This is not limited. For ease of description, the following uses an example in which the method is performed by the first network device for description.

The method may include: sending configuration information to a terminal device, where the configuration information is determined based on an optimization requirement for training a first AI model of a second network device, and the configuration information indicates the terminal device to perform measurement to obtain measurement data associated with the first AI model; receiving the measurement data from the terminal device; and training the first AI model based on the measurement data.

With reference to the second aspect, in some implementations of the second aspect, the configuration information includes an expected measurement area range.

With reference to the second aspect, in some implementations of the second aspect, the configuration information further includes at least one of the following: range information of a network device that receives the measurement data, an engineering parameter configuration of a target cell, an expected data type, measurement precision, or a source of the configuration information.

With reference to the second aspect, in some implementations of the second aspect, indication information #A is sent to the terminal device, where the indication information #A indicates the terminal device to perform measurement in any one of the following manners: MDT measurement, MRO report measurement, or RRM measurement.

With reference to the second aspect, in some implementations of the second aspect, indication information #B is sent to the terminal device, where the indication information #B indicates the terminal device to report the measurement data through the target cell, and the indication information #B includes an identifier of the target cell; or the indication information #B indicates the terminal device to report the measurement data through a target network, and the indication information #B includes an identifier of the target network.

With reference to the second aspect, in some implementations of the second aspect, a first measurement configuration is received from a second network device, where the first measurement configuration is used to obtain the measurement data for training the first AI model; and the configuration information is determined based on the first measurement configuration.

According to the foregoing solution, the first network device and the second network device are supported to exchange measurement requirements, and the first network device is allowed to deliver a measurement requirement of the second network device to the terminal device, to expand a data source for subsequent AI model training on a network side. In other words, an input data amount during training of the AI model on the network side is increased. In this way, model training effect is improved.

With reference to the second aspect, in some implementations of the second aspect, the first measurement configuration includes a measurement area range expected by the second network device.

According to the foregoing solution, the terminal device can effectively measure a measurement area range in a targeted manner, and can support training of the AI model on the network side. In this way, model optimization effect is improved.

With reference to the second aspect, in some implementations of the second aspect, the first measurement configuration further includes at least one of the following: identification information of the first AI model, a data type expected by the second network device, or a quantity of terminal devices expected by the second network device.

According to the foregoing solution, dimensions of measurement data collected by the terminal device can be increased, to obtain more comprehensive and accurate measurement data, so as to support training of the AI model on the network side. This improves model optimization effect.

With reference to the second aspect, in some implementations of the second aspect, a second measurement configuration is sent to the second network device, where the second measurement configuration is used to obtain data for training a second AI model.

According to the foregoing solution, the first network device and the second network device are supported to exchange measurement requirements, and the second network device is allowed to deliver a measurement requirement of the first network device to the terminal device, to expand a data source for subsequent AI model training on a network side. In other words, an input data amount during training of the AI model on the network side is increased. In this way, model training effect is improved.

With reference to the second aspect, in some implementations of the second aspect, the second measurement configuration includes a measurement area range expected by the first network device.

According to the foregoing solution, the terminal device can effectively measure a measurement area range in a targeted manner, and can support training of the AI model on a network side.

With reference to the second aspect, in some implementations of the second aspect, the second measurement configuration further includes at least one of the following: an identifier of the second AI model, a data type expected by the first network device, or a quantity of terminal devices expected by the first network device.

According to the foregoing solution, dimensions of measurement data collected by the terminal device can be increased, to obtain more comprehensive and accurate measurement data, so as to support training of the AI model on the network side. This improves model optimization effect.

For beneficial effect of the second aspect and some implementations of the second aspect, correspondingly refer to related descriptions of the first aspect. Details are not described herein again.

According to a third aspect, a communication method is provided. The method is applied to a terminal device. The method may be performed by the terminal device, or may be performed by a component (for example, a chip or a circuit) of the terminal device. This is not limited. For ease of description, an example in which the method is performed by the terminal device is used below for description.

The method may include: receiving an AI model and configuration information from a first network device, where the configuration information is determined based on an optimization requirement of an AI model of a second network device; performing measurement based on the configuration information to obtain measurement data associated with the AI model; training, by the terminal device, the AI model based on the measurement data; and sending related information of a trained AI model to the first network device.

The foregoing solution may be applied to a scenario in which the AI model works on the terminal device side. The terminal device performs measurement based on the received configuration information, trains the AI model based on the measurement data, and finally reports the related information of the trained AI model to the first network device. Due to measurement performed by the terminal device based on the configuration information, a case in which the terminal device occupies too much storage space due to data measurement can be avoided, or a case in which the terminal device cannot effectively complete model training due to insufficient measurement data can be avoided. In addition, determining the configuration information based on the optimization requirement for training the AI model of the second network device can support the second network device to obtain the measurement data of the terminal device through the first network device, to improve model training effect.

With reference to the third aspect, in some implementations of the third aspect, the configuration information includes an expected measurement area range.

According to the foregoing solution, the terminal device can effectively measure a measurement area range in a targeted manner, and can support effective training of the AI model on a network side.

With reference to the third aspect, in some implementations of the third aspect, the configuration information further includes at least one of the following: an engineering parameter configuration of the target cell, an expected data type, range information of a network device that receives the related information of the trained AI model, or measurement precision.

According to the foregoing solution, dimensions of measurement data collected by the terminal device can be increased, to obtain more comprehensive and accurate measurement data, so as to support the first network device in effective training the AI model. This improves model optimization effect.

With reference to the third aspect, in some implementations of the third aspect, indication information #A is received from the first network device, where the indication information #A indicates the terminal device to perform measurement in any one of the following manners: MDT measurement, MRO report measurement, or RRM measurement.

According to the foregoing solution, the indication information #A indicates the measurement manner of the measurement data to the terminal device, so that the terminal device can collect, in a targeted manner, the measurement data in different measurement manners.

With reference to the third aspect, in some implementations of the third aspect, first indication information is received from the first network device, where the first indication information indicates a condition for determining that training of the AI model is completed.

According to the foregoing solution, the condition for determining that training of the AI model is completed is determined by using the first indication information, so that model training effect can be effectively improved.

With reference to the third aspect, in some implementations of the third aspect, second indication information is received from the first network device, where the second indication information indicates the terminal device to report the trained AI model to the first network device, and the second indication information includes at least one of the following: an identifier of a target cell or an identifier of a target network.

For example, the configuration information carries range information of a network device that receives the related information of the trained AI model, including but not limited to the target cell and the target network.

According to the foregoing solution, the terminal device can ensure, based on the second indication information of the first network device, that the terminal device successfully sends the trained AI model to the first network device through the target cell, the target network, or the like. This avoids leakage of the related information of the trained AI model, and has high security.

According to a fourth aspect, a communication method is provided. The method is applied to a first network device. The method may be performed by the first network device, or may be performed by a component (for example, a chip or a circuit) of the first network device. This is not limited. For ease of description, the following uses an example in which the method is performed by the first network device for description.

The method may include: sending an AI model and configuration information to a terminal device, where the configuration information is determined based on an optimization requirement of an AI model of a second network device, and the configuration information indicates the terminal device to perform measurement to obtain measurement data associated with the AI model; and receiving related information of a trained AI model from the terminal device, where the trained AI model is obtained by training the AI model based on the measurement data.

With reference to the fourth aspect, in some implementations of the fourth aspect, the configuration information includes an expected measurement area range.

With reference to the fourth aspect, in some implementations of the fourth aspect, the configuration information includes at least one of the following: range information of a network device that receives the related information of the trained AI model, an engineering parameter configuration of a target cell, an expected data type, or measurement precision.

With reference to the fourth aspect, in some implementations of the fourth aspect, the first network device sends indication information #A to the terminal device, where the indication information #A indicates the terminal device to perform measurement in any one of the following manners: MDT measurement, MRO report measurement, or RRM measurement.

With reference to the fourth aspect, in some implementations of the fourth aspect, the first network device sends first indication information to the terminal device, where the first indication information indicates a condition for determining that training of the AI model is completed.

With reference to the fourth aspect, in some implementations of the fourth aspect, the first network device sends second indication information to the terminal device, where the second indication information indicates the terminal device to report the trained AI model to the first network device, and the second indication information includes at least one of the following: an identifier of a target cell or an identifier of a target network.

For beneficial effect of the fourth aspect and some implementations of the fourth aspect, correspondingly refer to related descriptions of the third aspect. Details are not described herein again.

According to a fifth aspect, a communication apparatus is provided, including: a transceiver unit, configured to receive configuration information from a first network device, where the configuration information is determined based on an optimization requirement for training an AI model of a second network device; and a processing unit, configured to perform measurement based on the configuration information, to obtain measurement data associated with the AI model, where the measurement data is used to train an AI model. The transceiver unit is further configured to send the measurement data to the first network device.

The transceiver unit may perform receiving and sending in the first aspect, and the processing unit may perform processing other than receiving and sending in the first aspect.

According to a sixth aspect, a communication apparatus is provided, including: a transceiver unit, configured to send configuration information to the terminal device, where the configuration information is determined based on an optimization requirement for training of a first AI model of a second network device, the configuration information indicates the terminal device to perform measurement to obtain measurement data associated with the first AI model, and the transceiver unit is further configured to receive the measurement data from a terminal device; and a processing unit, configured to train the first AI model based on the measurement data.

The transceiver unit may perform receiving and sending in the second aspect, and the processing unit may perform processing other than receiving and sending in the second aspect.

According to a seventh aspect, a communication apparatus is provided, including: a transceiver unit, configured to receive an AI model and configuration information from a first network device, where the configuration information is determined based on an optimization requirement of an AI model of a second network device; and a processing unit, configured to perform measurement based on the configuration information, to obtain measurement data associated with the AI model. The processing unit is further configured to train the AI model based on the measurement data. The transceiver unit is further configured to send related information of a trained AI model to the first network device.

The transceiver unit may perform receiving and sending in the third aspect, and the processing unit may perform processing other than receiving and sending in the third aspect.

According to an eighth aspect, a communication apparatus is provided, including: a transceiver unit, configured to send an AI model and configuration information to the terminal device, where the configuration information is determined based on an optimization requirement of an AI model of a second network device, and the configuration information indicates the terminal device to perform measurement to obtain measurement data associated with the AI model. The transceiver unit is further configured to receive related information of a trained AI model from the terminal device, where the trained AI model is obtained by training the AI model based on the measurement data.

The transceiver unit may perform receiving and sending in the fourth aspect, and the processing unit may perform processing other than receiving and sending in the fourth aspect.

According to a ninth aspect, a communication apparatus is provided, including a processor. The processor is configured to invoke a computer program from a memory and run the computer program, to enable the communication apparatus to perform the method according to any one of the possible implementations of the first aspect to the fourth aspect.

Optionally, there may be one or more processors.

Optionally, the communication apparatus further includes one or more memories. The memory may be integrated with the processor, or the memory and the processor are separately disposed.

Optionally, the communication apparatus further includes a transmitter (transmitter device) and a receiver (receiver device).

According to a tenth aspect, a communication system is provided, including a first network device and a second network device. The first network device is configured to perform the method according to any one of the possible implementations of the second aspect or the fourth aspect.

Optionally, the communication system may further include a terminal device, and the terminal device is configured to perform the method according to any one of the possible implementations of the first aspect or the third aspect.

According to an eleventh aspect, a computer-readable storage medium is provided. The computer-readable storage medium stores a computer program or code. When the computer program or code is run on a computer, the computer is enabled to perform the method according to any one of the possible implementations of the first aspect to the fourth aspect.

According to a twelfth aspect, a chip is provided, including at least one processor. The at least one processor is coupled to a memory. The memory is configured to store a computer program. The processor is configured to invoke the computer program from the memory and run the computer program, so that an apparatus on which the chip system is installed performs the method according to any one of the possible implementations of the first aspect to the fourth aspect.

The chip may include an input circuit or interface for sending information or data and an output circuit or interface for receiving information or data.

According to a thirteenth aspect, a computer program product is provided. The computer program product includes computer program code. When the computer program code is run on an apparatus, the apparatus is enabled to perform the method according to any one of the possible implementations of the first aspect to the fourth aspect.

### BRIEF DESCRIPTION OF DRAWINGS

FIG. 1 is a diagram of a communication system 100 according to an embodiment of this application;
FIG. 2 is a diagram of an architecture of an access network device according to an embodiment of this application;
FIG. 3 is a diagram of an AI application framework according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a diagram of a structure of a communication apparatus 1000 according to an embodiment of this application;
FIG. 7 is a diagram of a structure of a communication apparatus 2000 according to an embodiment of this application; and
FIG. 8 is a diagram of a structure of a chip system 3000 according to an embodiment of this application.

### DESCRIPTION OF EMBODIMENTS

The following describes technical solutions of embodiments in this application with reference to accompanying drawings.

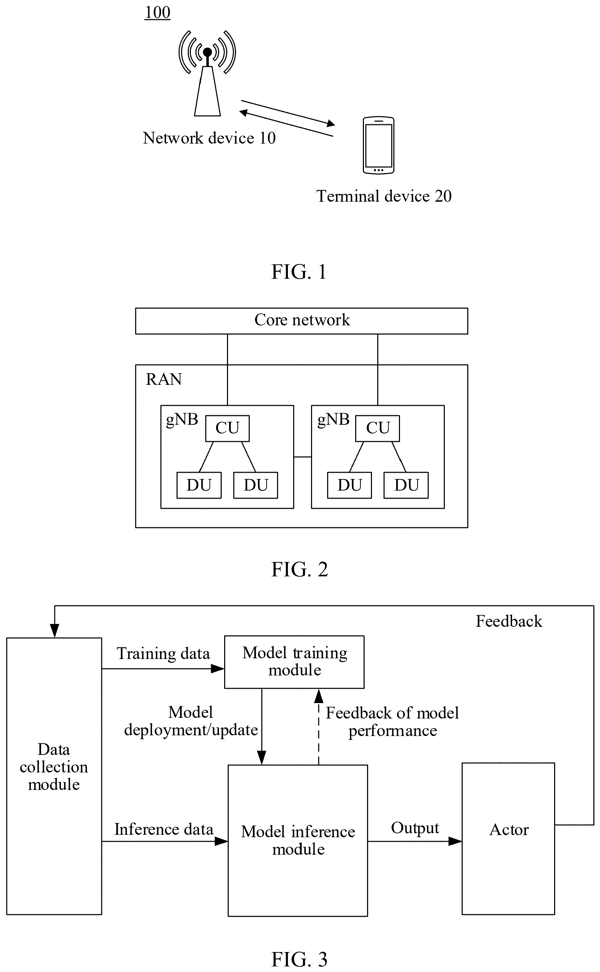

FIG. 1 is a diagram of a communication system 100 according to an embodiment of this application. As shown in FIG. 1, the communication system 100 includes a network device 10 and a terminal device 20. In the communication system, the terminal device 20 may send uplink data/an uplink signal/uplink information to the network device 10, and the network device 10 may send downlink data/a downlink signal/downlink information to the terminal device 20.

The communication method provided in this embodiment of this application may further relate to a device or a transmission node that is not shown in FIG. 1. This is not limited in this embodiment of this application.

The communication system used in embodiments of this application is merely an example for description, and a communication system applicable to embodiments of this application is not limited thereto. Any communication system that can implement functions of the foregoing devices is applicable to embodiments of this application.

The technical solutions in embodiments of this application may be applied to various communication systems, for example, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, an NR system, a 5th generation (5th Generation, 5G) system, or a future evolved communication system (for example, a 6G mobile communication system). The technical solutions in embodiments of this application may be applied to various scenarios such as vehicle-to-everything (vehicle-to-everything, V2X), internet of vehicles, machine type communication (machine type communication, MTC), internet of things (Internet of things, IoT), long term evolution machine-to-machine (long term evolution-machine, LTE-M), and machine to machine (machine to machine, M2M).

A terminal device may be a wireless terminal device that can receive scheduling and indication information of an access network device. The terminal device may be a device that provides a user with voice and/or data connectivity, a handheld device having a wireless connection function, or another processing device connected to a wireless modem.

The terminal device in embodiments of this application may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. A terminal device is a device that includes a wireless communication function (providing voice/data connectivity to a user), for example, a handheld device or a vehicle-mounted device having a wireless connection function. The terminal device in embodiments of this application may be a mobile phone, a tablet computer, a computer with a wireless transceiver function, a train, an airplane, a mobile internet device (mobile internet device, MID), a virtual reality (virtual reality, VR) terminal, an augmented reality (augmented reality, AR) terminal, a wireless terminal in industrial control (for example, a robot), a wireless terminal in internet of vehicles (for example, a vehicle-mounted device, an entire vehicle device, a vehicle-mounted module, or a vehicle), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, or the like. In addition, the terminal device may be further used in scenarios such as unmanned driving, telemedicine, a smart grid, transportation security, a smart city, and a smart home.

The network device may be a device in a wireless network. For example, the network device may be a device that is deployed in a radio network and that provides a wireless communication function for the terminal device. For example, the network device may be a radio access network (radio access network, RAN) node that connects the terminal device to the wireless network. The RAN may be connected to a core network (for example, a long term evolution (long term evolution, LTE) core network, or a 5G core network).

The network device in embodiments of this application may be an access network device, including but not limited to various base stations such as a next generation nodeB (gNodeB, gNB), an evolved nodeB (evolved NodeB, eNB), or a base station device in a future evolved communication system, or may be a server, a wearable device, a vehicle-mounted device, a wireless relay node, a wireless backhaul node, a transmission point (transmission point, TP), or a transmission and reception point (transmission and reception point, TRP), or may be one or a group of antenna panels (including a plurality of antenna panels) of a base station, or may be a network node that forms a base station, for example, a baseband unit (BBU) or a distributed unit (distributed unit, DU). The base station may be a macro base station, a micro base station, a pico base station, a small cell, a relay station, a balloon station, or the like.

The network device in embodiments of this application may alternatively be a core network device, and includes but is not limited to an access and mobility management function (access and mobility management function, AMF) network element, a session management function (session management function, SMF) network element, a user plane function (user plane function, UPF) network element, a policy control function (policy control function, PCF) network element, a unified data management function UDM network element, or the like.

It may be understood that all or some functions of the network device or the terminal device in this application may alternatively be implemented by using a software function running on hardware, or may be implemented by using an instantiated virtualisation function on a platform (for example, a cloud platform).

FIG. 2 is a diagram of an architecture of an access network device according to an embodiment of this application. As shown in FIG. 2, the access network device in embodiments of this application may be a split architecture with a central unit (centralized unit, CU) and a distributed unit (distributed unit, DU). It may be understood that the access network device is divided into the CU and the DU from the perspective of logical functions. The CU and the DU may be physically separated or deployed together. A plurality of DUs may share one CU. One DU may alternatively be connected to a plurality of CUs (not shown in FIG. 2). The CU and the DU may be connected to each other through an interface, for example, an F1 interface. Division into the CU and the DU may be performed based on a protocol layer of a wireless network. For example, the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that processing function division of the CU and the DU based on the protocol layers is merely an example, and division into the CU and the DU may be performed in another manner. For example, functions of more protocol layers than those in the foregoing division manner may be divided into the CU or the DU. For example, some processing functions of the protocol layers in the foregoing division manner may alternatively be divided into the CU or the DU.

In a design, functions of the CU or the DU may be divided based on a service type or another system requirement. For example, division is performed based on a delay. Functions whose processing time meets a delay requirement are set in the DU for implementation, and functions that do not meet the delay requirement are set in the CU for implementation.

In another design, the CU may alternatively have one or more functions of the core network. One or more CUs may be disposed together or separately. For example, the CUs may be disposed on a network side for ease of centralized management. The DU may have a plurality of radio frequency functions, or the radio frequency functions may be disposed remotely.

A function of the CU may be implemented by one entity or different entities. For example, the function of the CU may be further divided, for example, separated into a control plane (control plane, CP) and a user plane (user plane, UP), namely, the control plane (CU-CP) of the CU and the user plane (CU-UP) of the CU. The CU-CP, the control plane of the CU, may further be of an architecture in which the CU-CP is further divided. To be specific, the CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

In different systems, the CU (including the CU-CP and the CU-UP) or the DU may also have different names, but a person skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP. For ease of description, the CU, the CU-CP, the CU-UP, and the DU are used as examples for description in this application.

An AI model is a module having a machine learning computing capability. In a wireless communication system, the AI module may be located in operations, administration, and maintenance (operations, administration and maintenance, OAM), or may be located in an access network device (for example, if the access network device is of a split architecture, the AI module may be located in a CU), or may be located in a terminal device, or may be independently a network element entity AI control layer (AI control layer, AIC). A main function of the AI module in the wireless communication system is to perform a series of AI computation such as model establishment, training approximation, and reinforcement learning based on input data (in the wireless communication system, the input data is generally network running data provided by the access network device or monitored by the OAM, for example, network load, channel quality, or a user plane data transmission status provided by a core network). A trained model provided by the AI module has a prediction function for a network change on a RAN side, and may be used for load prediction, terminal device path prediction, and the like. In addition, the AI module may further perform policy inference from perspectives of network energy saving, mobility optimization, and the like based on a result of predicting RAN network performance by using the trained model, to obtain an appropriate and efficient energy saving policy, mobility optimization policy, and the like. When the AI model is located in the CU, and the CP and the UP of the CU are separated, the CP may be responsible for receiving an AI model and subsequent inference and policy generation functions of the AI model. When the CU-CP is further divided into a CU-CP 1 and a CU-CP 2, the CU-CP 1 may be responsible for receiving the AI model and a subsequent inference function of the AI model, and generating specific interaction signaling, and the CU-CP 2 sends the signaling.

FIG. 3 is a diagram of an AI application framework according to an embodiment of this application. As shown in FIG. 3, the AI application framework includes a data collection module, a model training module, a model inference module, and an actor (Actor).

The model training module and the model inference module are examples of an AI module. For example, the network device and the terminal device shown in FIG. 1, and the CU, the DU, or another management entity of the gNB shown in FIG. 2 may input data to the data collection module. The data collection module may be used as a database for AI model training and data analysis and inference. The model training module analyzes training data output by the data collection module, provides an available AI model, and deploys the obtained AI model to the model inference module. The model inference module provides, for network running based on inference data output by the data collection module, appropriate prediction based on the AI model (obtained by the model training module through training), and feeds back performance data of the AI model to the model training module. Subsequently, the model training module continues to train the model based on the fed back performance data, and notifies the model inference module of an updated AI model. Alternatively, the model inference module indicates a network to perform policy adjustment based on the inference data output by the data collection module and the AI model. Related policy adjustment is planned by the actor in a unified manner, and policies are sent to a plurality of network entities for running. In this case, after a related policy is applied, specific performance of the network is fed back to the data collection module for storage.

The 3rd generation partnership project (3rd generation partnership project, 3GPP) introduces a plurality of AI application scenarios on a RAN side. In some AI application scenarios, a terminal device may implement some AI functions, and an access network device may transmit the AI model to the terminal device. In addition, in some AI application scenarios on the terminal device side, the access network device may implement some AI functions, and the terminal device may transmit the AI model to the access network device.

AI application on the RAN side includes but is not limited to the following application scenarios: energy saving (energy saving), load balancing (load balancing), mobility optimization (mobility optimization), channel state information-reference signal (channel state information-reference signal, CSI-RS) feedback enhancement, beam management enhancement (beam management enhance, BME), and positioning enhancement. These application scenarios may also be referred to as AI use cases (use cases).

For example, MDT types (or referred to as MDT modes) include logged MDT (logged MDT) and immediate MDT (immediate MDT). Specifically, logged MDT measurement is MDT measurement performed by the terminal device in a radio resource control (radio resource control, RRC) idle (RRC_IDLE) state or an RRC inactive (RRC_INACTIVE) state. Logged MDT is used to measure strength of a received signal. For example, the terminal device in the idle state or the terminal device in the inactive state measures a cell of a frequency number corresponding to a cell on which the terminal device currently camps and an inter-frequency/inter-RAT neighboring cell corresponding to cell reselection broadcast in the cell on which the terminal device currently camps. If a network side configures the terminal device in the idle state or the inactive state to perform MDT measurement, when the terminal device enters a connected state, the terminal device no longer continues to perform MDT measurement based on a configuration of MDT measurement performed by the terminal device in the idle state or the inactive state. If the network side further expects to obtain a result of MDT measurement, the network side may configure measurement information of MDT measurement performed by the terminal device in the connected state.

The terminal device may collect and report measurement information for training of the AI model. In addition to measurement of a conventional reference signal, for example, reference signal received power (reference signal receiving power, RSRP) or a signal to interference plus noise ratio (signal to interference plus noise ratio, SINR), assistance information (assistance information) is further included, and the assistance information includes different types of information such as a movement direction and a movement speed of the terminal device. For different AI models and cells with different engineering parameters such as antenna forms, measurement requirements for assistance information are different. For example, in an application scenario of beam management enhancement, in a beam sweeping process, in a cell with a more complex antenna form, a larger quantity of beams need to be measured. Therefore, when the terminal device is configured to perform measurement, data is collected for different cell engineering parameters, AI model types used by cells, and the like. Otherwise, storage of the terminal device may be limited due to excessive collected measurement data, or training of the AI model cannot be supported due to insufficient measurement data collected.

In addition, when the network device performs model training, the terminal device measures and reports historical measurement information within a period of time. Because different device vendors use different AI models, collected measurement information of the terminal device is also different. However, currently, there is no exchanging of related information, between network devices, for training the AI model. This limits an input data amount during model training and reduces model training efficiency. Therefore, how to design appropriate configuration information to improve optimization effect of the AI model is an urgent technical problem to be resolved.

Embodiments of this application provide a communication method and apparatus. Appropriate configuration information is designed, so that a terminal device can measure and obtain, based on configuration information delivered by a first network device, measurement data that supports AI model training. This effectively improves model training effect and reduces storage overheads on the terminal device side.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms and similar operations or steps in embodiments may be mutually referenced or explained in embodiments. This is not limited in this application.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between the associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in embodiments of this application, "first", "second", and various numbers are used for differentiation for ease of description, and are not used to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in this application, the terms "include", "have", and any variants thereof are intended to cover a non-exclusive inclusion. For example, a process, a method, a system, a product, or a device that includes a series of steps or units is not necessarily limited to those steps or units that are clearly listed, but may include other steps or units that are not clearly listed or are inherent to the process, the method, the product, or the device.

Fifth, in this application, "indicate" may include "directly indicate" and "indirectly indicate". When a piece of indication information indicates A, the indication information may directly indicate A or indirectly indicate A, but it does not indicate that the indication information definitely carries A.

Sixth, in this application, "sending information to XX (device)" may be understood as that a destination end of the information is the device, and may include "directly or indirectly sending the information to the device". "Receiving information from XX (device) or receiving information that is from XX (device)" may be understood as that a source end of the information is the device, and may include "directly or indirectly receiving the information from the device". Necessary processing, such as a format change, may be performed on the information between the source end and the destination end for information sending. However, the destination end can understand valid information from the source end.

The following describes, in detail with reference to the accompanying drawings, a communication method provided in embodiments of this application. Embodiments provided in this application are applicable to any communication scenario in which a transmit-end device communicates with a receive-end device, for example, may be used in the communication system shown in FIG. 1.

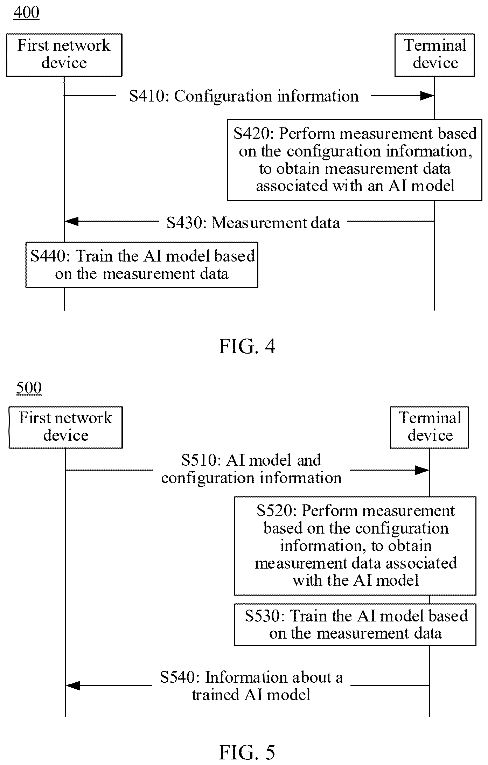

FIG. 4 is a schematic flowchart of a communication method 400 according to an embodiment of this application. A target scenario of the solution is as follows: An AI model works on a first network device side, and the first network device delivers configuration information to a terminal device, and indicates a measurement requirement for AI model training, so that the terminal device collects measurement data and reports the measurement data to the first network device, to support model training on the first network device side. The method procedure may be performed by the terminal device and the first network device, or may be performed by a module and/or a component (for example, a chip or an integrated circuit) that are installed on the terminal device and the first network device and that have a corresponding function. This is not limited in this application. The following uses the terminal device and the first network device as execution bodies for description, and a plurality of steps in the following are included.

S410: The first network device sends the configuration information to the terminal device.

Correspondingly, the terminal device receives the configuration information from the first network device.

The configuration information is determined based on an optimization requirement for training an AI model of a second network device.

In this embodiment of this application, the optimization requirement may be understood as measurement data that a network side expects the terminal device to measure or collect for the network device to obtain an AI model with good training effect or to obtain a better AI model. It should be understood that this application is applicable to a training process of the AI model, including a series of AI computation such as AI model establishment, training approximation, and reinforcement learning.

Optionally, the first network device may be a base station or a core network device, and the second network device may also be a base station (gNB) or a core network device. The first network device and the second network device may be a same device, or may be different devices. This is not specifically limited in this application. For example, when the first network device and the second network device are different devices, before step S410 is performed, the method may further include: The second network device indicates an optimization requirement for training an AI model to the first network device, to help the first network device determine the configuration information. For a specific implementation, refer to S400a and S400b below. For ease of understanding, an example in which both the first network device and the second network device are gNBs in the following example is used for description.

Specifically, if the first network device is a gNB, a module for sending the configuration information to the terminal device may be located in the gNB, a gNB-CU, a gNB-CU-CP, or a gNB-CU-CP 1. For example, the configuration information may be generated by a gNB-CP, the gNB-CU-CP, or the gNB-CU-CP 1. Correspondingly, the gNB-CP, the gNB-CU-CP, or a gNB-CU-CP 2 sends the measurement configuration information to the terminal device.

In an implementation, the configuration information includes an expected measurement area range.

For example, the expected measurement area range may include identification information of an area in which measurement is expected to be performed. The identification information of the area includes at least one of the following information: cell identification information, a PLMN identifier, a private network identifier, or a zone identifier (zone ID). The cell identification information includes at least one of the following information: a cell global identifier (cell global identifier, CGI), a physical cell identifier (physical cell identifier, PCI), a frequency, a cell identifier (cell identifier, cell ID), a non-public network identifier (non-public network identifier, NPN ID), a non-terrestrial network identifier (non-terrestrial network identifier, NTN ID), a tracking area code (tracking area code, TAC), or identification information of a network device to which a cell belongs (for example, a global network device identifier). The zone identifier indicates an area including at least one cell.

In an implementation, the configuration information further includes at least one of the following:

### (1) Range information of a network device receiving measurement data

For example, the range information of the network device receiving the measurement data may include cell list information, network device list information, or the like. A network device that manages a cell indicated in the cell list information or a network device indicated in the network device list information may receive the measurement data. For example, a target cell mentioned below is included in the cell list information, and a third network device, a fourth network device, and a fifth network device are included in the network device list information.

### (2) Engineering parameter configuration of the target cell

For example, the engineering parameter configuration of the target cell may be a configuration like an antenna form, location information, a cell radius, or an antenna height that are related to a target cell. Because engineering parameters of different target cells are different, corresponding measurement data is also different. For example, for a cell whose antenna form is 64TRX and a cell whose antenna form is 8TRX, RSRP of a plurality of beams is measured by using a beam sweeping optimization model. In other words, compared with the cell whose antenna form is 8TRX, measurement results of more beams may be collected for the cell whose antenna form is 64TRX.

### (3) Expected data type

For example, the expected data type may be signal quality, for example, RSRP or an SINR, of a beam that the terminal device is expected to measure, or other assistance information, for example, a movement direction or speed of the terminal device, or measurement duration or a data amount corresponding to expected measurement data, for example, measurement data within one hour, or 500 groups of measurement data.

### (4) Measurement precision

For example, the measurement precision indicates a degree of proximity between a measurement value and a true value. Generally, a larger difference between the measurement value and the true value indicates lower measurement precision, and a smaller difference between the measurement value and the true value indicates higher measurement precision. For example, expected measurement precision of the movement speed of the terminal device is 0.1 m/s, or the expected measurement precision of the RSRP of the beam is 0.01 dB.

### (5) Source of the configuration information

The source of the configuration information indicates a requester that requests to obtain the measurement data used for AI model training, for example, the first network device and the second network device.

It should be understood that the plurality of pieces of information included in the configuration information provided above may be used in combination, or may be used independently. This is not limited in this application.

The following describes the configuration information in Table 1 for an application scenario of beam management enhancement. For example, the first network device may indicate, by using the configuration information, the terminal device to measure RSRP of a specific quantity of beams and other assistance information, for example, the movement speed of the terminal device and/or the movement direction of the terminal device. The terminal device performs beam sweeping based on the configuration information. It should be understood that in a beam sweeping process, more beams need to be measured in a cell with a more complex antenna form. After beam sweeping is completed, the terminal device may obtain a beam with good quality, for example, measurement precision of RSRP of the beam reaches 0.01 dB, and report the obtained beam and measurement data corresponding to the beam to the first network device, so that the first network device trains a local model based on the measurement data provided by the terminal device, to implement of beam management enhancement.

**Table 1**

| Expected measurement area range | Engineering parameter configuration of the target cell | Expected data type | Measurement precision | Source of the configuration information |
|---|---|---|---|---|
| CGI 1 | Configuration A | XX beam RSRP+speed | 0.1 m/s | Source gNB |
| CGI 2 | Configuration B | YY beam RSRP+direction | 0.01 dB | Neighboring gNB |
| PLMN | | Other model-related parameters/information | | |

Each piece of information in the configuration information in the example in Table 1 may be a specific parameter value, or may be a coding value agreed on in advance by the first network device and the terminal device. Content and an expression form of the configuration information are not limited in this embodiment of this application. It should be understood that Table 1 is merely an example provided for ease of understanding, and should not constitute any limitation on this application. Table 1 may have another conversion. This is not limited in this application.

For example, as shown in Table 1, when the configuration information indicates that the terminal device enters a cell corresponding to a cell global identifier (cell global identifier, CGI), for example, the CGI 1, an engineering parameter configuration of a corresponding target cell is the configuration A, and an expected data type includes RSRP of XX (for example, XX=20) beams and the movement speed of the terminal device. The configuration information may further indicate measurement precision. For example, measurement precision of RSRP of a beam is 0.01 dB, and the measurement precision of the movement speed of the terminal device is 0.1 m/s. The configuration information may further indicate the source of the configuration information, for example, the source gNB. Optionally, a configuration source is indicated by using an identifier of the source gNB or identification information of a cell managed by the source gNB.

For example, as shown in Table 1, when the configuration information indicates that the terminal device enters a cell corresponding to the CGI 2, an engineering parameter configuration of a corresponding target cell is the configuration B, and an expected data type includes RSRP of YY (for example, YY=10) beams and the movement direction of the terminal device. The configuration information may further indicate measurement precision. For example, measurement precision of RSRP of a beam is 0.01 dB, and the movement direction of the terminal device is a due east direction. The configuration information may further indicate the source of the configuration information, for example, the neighboring gNB. Optionally, a configuration source is indicated by using an identifier of the neighboring gNB or identification information of a cell managed by the neighboring gNB.

Optionally, the first network device further sends indication information #A to the terminal device. Correspondingly, the terminal device receives the indication information #A from the first network device. The indication information #A indicates the terminal device to perform measurement in any one of the following manners: MDT measurement, MRO report measurement, or RRM measurement.

MDT measurement may include: logged MDT (logged MDT) and immediate MDT (immediate MDT). Logged MDT may be used to measure strength of a received signal. Immediate MDT measurement is MDT measurement performed by the terminal device in an RRC connected state (RRC_CONNECTED). Immediate MDT is used to measure at least one of a data amount, a throughput, a packet transmission delay, a packet loss rate, or a processing delay of the terminal device. In an implementation, the indication information #A may indicate logged MDT or immediate MDT.

MRO measurement may be used to obtain various types of mobility optimization reports, for example, including a radio link failure (radio link failure, RLF) report, a successful handover report (successful handover report, SHR), a connection establishment failure (connection establishment failure, CEF) report, or a random access channel report (random access channel report, RACH report). In an implementation, the indication information #A may indicate any one or more of the foregoing report types.

RRM measurement is measurement performed by the terminal device on a reference signal. The reference signal includes, for example, a synchronization signal and PBCH block (synchronization signal and physical broadcast channel block, SSB), a channel state information reference signal (channel state information reference signal, CSI-RS), beam-level reference signal received power (reference signal receiving power, RSRP), or a signal to interference plus noise ratio (signal to interference plus noise ratio, SINR). In an implementation, the indication information #A may indicate to measure any one or more of the foregoing reference signals.

The indication information #A and the configuration information in step S410 may be sent to the terminal device together or separately. Optionally, the indication information #A may be carried in the configuration information, and two bits indicate a measurement manner for measuring data by the terminal device. For example, "00" indicates MDT measurement, "01" indicates MRO report measurement, "10" indicates RRM measurement, and "11" indicates that the terminal device determines by itself a measurement manner. This is not limited in this application.

It should be noted that, configurations of the MRO measurement and the RRM measurement may be locally generated by the first network device, the measurement data may be locally collected, read, and applied by the first network device, and a configuration of the MDT measurement is generally generated by OAM. Because the first network device has no right to use the measurement data obtained by the terminal device through MDT measurement, the first network device collects the measurement data from the terminal device and sends the measurement data to a trace collection entity (trace collection entity, TCE). Therefore, if the first network device expects the terminal device to use an MDT measurement manner, the first network device sends a request message to the OAM, to request to obtain an MDT measurement configuration, request to allow the first network device to deliver a specific measurement item to the terminal device, namely, the expected data type shown in Table 1, and request to allow the first network device to read and apply the measurement data reported by the terminal device. On the basis of authorization of the OAM, the first network device may indicate, by using the indication information #A, the terminal device to obtain the measurement data in the MDT measurement manner, and train, by using the data, the AI model after receiving the measurement data reported by the terminal device.

In an implementation, the first network device may further send indication information #B to the terminal device. Correspondingly, the terminal device receives the indication information #B from the first network device. The indication information #B indicates the terminal device to report the measurement data through the target cell, and the indication information #B includes an identifier of the target cell; or the indication information #B indicates the terminal device to report the measurement data through a target network, and the indication information #B includes an identifier of the target network.

The target cell may be a cell managed by an access network device that is currently accessed by the terminal device. For example, if the terminal device currently accesses a first access network device, the target cell is a cell managed by the first access network device. For another example, in a handover scenario, if the terminal is handed over from a source access network device like the first network device to a target access network device like the second network device, the target cell is a cell managed by the target access network device. With reference to Table 1, it is assumed that the terminal device accesses a cell 1 corresponding to the CGI 2 of the neighboring gNB shown in Table 1. In this case, it may be considered that the terminal device moves from the source gNB to a coverage range of the neighboring gNB, and a current access network device of the terminal device is the neighboring gNB. Alternatively, the target cell may be a cell covered by a gNB other than the source gNB and the neighboring gNB. In this case, the access network device accessed by the terminal device is the gNB. Alternatively, the target cell may be a cell 2 corresponding to the CGI 1 of the source gNB shown in Table 1. This is not specifically limited in this application. The target network may be a PLMN currently accessed by the terminal device. In other words, the terminal device may report the measurement data to the first network device through the target cell or the target network. When the target cell is managed by a network device other than the first network device, for example, the second network device, the terminal device may first send the measurement data to the network device through the target cell, and then the network device forwards the measurement data to the first network device. There may be a direct or indirect communication interface between the first network device and another network device.

Optionally, the first network device may forward the indication information #B to the terminal device through the second network device. For example, when the terminal device moves to the neighboring gNB, the source gNB may send the indication information #B to the terminal device through the neighboring gNB.

The indication information #B and the configuration information in step S410 may be sent to the terminal device together or separately. Optionally, the indication information #B may be carried in the configuration information, as shown in Table 1. For example, when the indication information #B indicates the CGI 1, after subsequently obtaining the measurement data, the terminal device reports the measurement data to the first network device through the cell indicated by the CGI 1. For another example, when the indication information indicates a PLMN#1 ID, after subsequently obtaining the measurement data, the terminal device reports the measurement data to the first network device through a PLMN#1 or a cell in a range of the PLMN#1, to ensure that the measurement data of the terminal device can be successfully forwarded to the first network device, so as to avoid a problem like privacy leakage of the AI model.

In an implementation, before performing step S410, the first network device may exchange, with the second network device, information about a measurement configuration used for model training. It should be understood that a communication interface, for example, an Xn interface or an NB interface, is established between the first network device and the second network device. For example, the first network device and the second network device are neighboring base stations.

For example, before S410, the method 400 further includes:

S400a: The second network device sends a first measurement configuration to the first network device.

Correspondingly, the first network device receives the first measurement configuration from the second network device.

In other words, the second network device may send the first measurement configuration to the first network device through the communication interface based on an optimization requirement (for example, additional positioning information of the terminal device) for model training of the second network device. Optionally, for information included in the first measurement configuration, refer to Table 2.

In an implementation, the first measurement configuration includes a measurement area range expected by the second network device.

For a specific meaning or content of the measurement area range expected by the second network device, refer to related descriptions in the foregoing configuration information.

In an implementation, the first measurement configuration further includes at least one of the following:

### (1) Identification information of a first AI model

For example, the identification information of the first AI model indicates an AI model trained by using measurement data that the second network device expects to collect, and may be represented by a model identifier, or may be represented by a function identifier. The function identifier indicates a specific function that can be implemented by the AI model. For example, the AI model is used to implement a path prediction function of the terminal device, or the AI model is used to implement a downlink channel prediction function.

### (2) Data type expected by the second network device

For a specific meaning or content of the data type expected by the second network device, refer to related descriptions in the foregoing configuration information.

### (3) Quantity of terminal devices expected by the second network device

For example, the quantity of terminal devices expected by the second network device may be understood as a requirement imposed by the second network device on the quantity of terminal devices based on an optimization requirement of AI model training, to ensure model training effect; and for example, if the second network device locally has a small amount of available data for model training, resulting in a significant gap from reaching an appropriate model optimization level, the second network device may indicate the expected quantity of terminal devices to the first network device by using the first measurement configuration, and vice versa.

S400b: The first network device determines the configuration information based on the first measurement configuration.

The first measurement configuration is used to obtain measurement data for training the first AI model. It is pointed out that the first AI model herein is included in the AI model in step S410.

In an implementation, the first network device may determine the configuration information in step S410 based on an optimization requirement of the first network device for AI model training and the first measurement configuration received in the foregoing step S400a. For example, it is assumed that AI models trained by the first network device and the second network device are the same. The first measurement configuration indicates that the terminal device enters the cell corresponding to the CGI 1 and expects to measure RSRP of 10 beams and the movement speed of the terminal device. The optimization requirement of the first network device for AI model training indicates that the terminal device enters the cell corresponding to the CGI 1 and expects to measure RSRP of 20 beams and the movement direction of the terminal device. In this case, the configuration information determined by the first network device may indicate that the terminal device enters the cell corresponding to the CGI 1, and expects to measure the RSRP of the 20 beams, the movement speed and the movement direction of the terminal device, and the like.

For example, the first network device may be a source station, for example, the source gNB, and the second network device may be a neighboring station of the source station, for example, the neighboring gNB. In the handover scenario, this is also applicable to the foregoing steps S400a and S400b.

It should be understood that the foregoing implementation is described by using an example in which the first network device obtains the first measurement configuration from the second network device, determines the configuration information, and sends the configuration information to the terminal device.

In an implementation, this application is also applicable to a case in which the second network device obtains a second measurement configuration from the first network device, determines the configuration information, and sends the configuration information to the terminal device.

Specifically, in this implementation, the first network device sends the second measurement configuration to the second network device. Correspondingly, the second network device receives the second measurement configuration from the first network device. Optionally, for information included in the second measurement configuration, refer to Table 2. The second measurement configuration is used to obtain data for training a second AI model. It should be understood that this implementation is in a parallel relationship with the foregoing solution including steps S400a and S400b. The second AI model may be the same as or different from the first AI model. Herein, only an example is provided for distinguishing between determining the measurement configuration information by the first network device or the second network device to obtain the measurement data to support training of the AI model.

In an implementation, the second measurement configuration includes a measurement area range expected by the first network device.

In an implementation, the first measurement configuration further includes at least one of the following:
(1) an identifier of the second AI model;
(2) a data type expected by the first network device; and
(3) a quantity of terminal devices expected by the first network device.

For specific meanings or content of parameters in the second measurement configuration, refer to related descriptions of the first measurement configuration.

Further, the second network device determines configuration information (referred to as configuration information #B in the following to distinguish from the configuration information in steps S410 and S400b) based on the second measurement configuration, sends the configuration information #B to the terminal device, and indicates the terminal device to measure measurement data associated with an AI model indicated in the configuration information #B. The second network device performs training processing on the AI model based on the measurement data. For an implementation for determining and sending the configuration information #B by the second network device, refer to content described in the foregoing steps S400a, S400b, and S410.

The following describes, with reference to Table 2, an example of the first measurement configuration or the second measurement configuration exchanged between the first network device and the second network device. It should be understood that Table 2 shows content determined by the first network device or the second network device based on a requirement of the first network device or the second network device and related privacy protection, is merely an example provided for ease of understanding, and should not constitute any limitation on this application. Table 2 may have another conversion, or the measurement configuration includes some content of the example in Table 2, or the measurement configuration may further include other content other than that in Table 2. This is not limited in this application.

**Table 2**

| Identifier of an AI model | Expected data type | Measurement area level | Target area | Expected quantity of terminal devices |
|---|---|---|---|---|
| Model X | RSRP | Cell | CGI | A |
| Model Y | Speed+direction | PLMN | PLMN ID | B |

It should be noted that information of the first measurement configuration or the second measurement configuration in the example in Table 2 may be specific parameter values, or may be encoding values agreed on in advance by the first network device and the second network device. Content and an expression form of the configuration information are not limited in this embodiment of this application.

The measurement area level in Table 2 may indicate an expected measurement area level or a granularity of a measurement area, including a cell (Cell) level or a PLMN level. For example, if the measurement area level is a cell (cell) level, the target area may be an identifier of a specific cell, for example, a CGI. For another example, if the measurement area level is a PLMN level, the target area may be an identifier of a specific PLMN, for example, a PLMN ID. In addition, the measurement area level may be alternatively indicated in another manner. Herein, only a cell level and a PLMN level are used as examples. This is not limited in this application.

Optionally, in this embodiment of this application, the measurement area level and the target area may be an implementation of an expected measurement area range carried in the configuration information determined by the first network device, or may be an implementation of an expected measurement area range carried in the configuration information #B determined by the second network device. This is not limited in this application.

For example, an example in which Table 2 shows the first measurement configuration is used for description, to be specific, Table 2 shows the measurement configuration that is sent by the second network device to the first network device and that is used for AI model training. For example, the first measurement configuration indicates that, for the Model X, the data type expected by the second network device is the RSRP, an expected measurement area level is a measurement area level that is a cell level, the corresponding target area indicates a specific cell, the cell is identified by a CGI, and it indicates that the quantity of terminal devices expected by the second network device is A (for example, A=10). For another example, the first measurement configuration may further indicate that, for the Model Y, the data type expected by the second network device is the movement direction and the movement speed of the terminal device, the measurement area range expected by the second network device indicates that a measurement area level is a PLMN level, and the corresponding target area is identified by a PLMN ID, and indicate that the quantity of terminal devices expected by the second network device is B (for example, B=20).

Further, based on an optimization measurement requirement for AI model training exchanged between the first network device and the second network device, the first network device may determine, based on the optimization requirement for training the AI model of the second network device (as shown in Table 2), configuration information corresponding to the neighboring gNB shown in Table 1, determine, based on the optimization requirement for training the AI model of the first network device, configuration information corresponding to the source gNB shown in Table 1, and send the configuration information shown in Table 1 to the terminal device.

S420: The terminal device performs measurement based on the configuration information, to obtain measurement data associated with the AI model.

The measurement data is used to train the AI model.

For example, the terminal device sequentially measures, based on the received configuration information, as shown in Table 1, data types corresponding to the CG 1, the CG 2, and the PLMN based on measurement precision.

Specifically, the terminal device may perform measurement in a measurement manner indicated by the indication information #A, and report a measurement result to the first network device. For example, the terminal device determines, based on the indication information #A, to use the MDT measurement manner to measure data associated with the configuration information shown in Table 1, or for another example, the terminal device determines, based on the indication information #A, to use the MRO report measurement manner to measure data associated with the configuration information shown in Table 1.

For example, the terminal device may choose, based on a source of the received configuration information in Table 1, to separately store the measurement data or locally store the measurement data.

S430: The terminal device sends measurement data to one or more network devices.

Optionally, when reporting the measurement data, the terminal device may filter the measurement data based on the source of the configuration information, and then separately report the measurement data to a source of corresponding configuration information.

In an implementation, when the source of the configuration information is the first network device, the terminal device sends measurement data #1 and an identifier of the first network device to the third network device, to indicate the third network device to forward the measurement data #1 to the first network device.

Optionally, the third network device is an access network device currently accessed by the terminal device, or may be a core network device. This is not limited in this application. The third network device may be the second network device. The terminal device determines the third network device based on range information that is of a network device receiving the measurement data and that is carried in the configuration information.

For example, the measurement data #1 and the identifier of the first network device may be sent together or separately.

For example, the terminal device may send indication information #C to the third network device, to indicate the third network device to forward the measurement data #1 to the first network device. The indication information #C, the measurement data #1, and the identifier of the first network device may be sent together or separately. This is not specifically limited in this application.

In an implementation, when the source of the configuration information is the second network device, the terminal device sends measurement data #2 and an identifier of the second network device to the fourth network device, to indicate the fourth network device to forward the measurement data #2 to the second network device.

Optionally, the fourth network device may be an access network device currently accessed by the terminal device, or may be a core network device. This is not limited in this application. The fourth network device may be the second network device. The terminal device determines the fourth network device based on range information that is of a network device receiving the measurement data and that is carried in the configuration information.

For example, the measurement data #2 and the identifier of the second network device may be sent together or separately.

For example, the terminal device may send indication information #D to the fourth network device, to indicate the fourth network device to forward the measurement data #2 to the second network device. The indication information #D, the measurement data #2, and the identifier of the second network device may be sent together or separately. This is not specifically limited in this application.

In an implementation, the terminal device sends the measurement data, the identifier of the first network device, and the identifier of the second network device to the fifth network device. The measurement data includes first data and second data, to indicate the fifth network device to forward the first data to the first network device and forward the second data to the second network device. Optionally, the terminal device sends the identifier of the first network device and the identifier of the second network device to the fifth network device.

Optionally, the fifth network device may be an access network device currently accessed by the terminal device, or may be a core network device. This is not limited in this application. The fifth network device may be the second network device. The terminal device determines the fifth network device based on range information that is of a network device that receives the measurement data and that is carried in the configuration information.

For example, the first data, the second data, the identifier of the first network device, and the identifier of the second network device may be sent together or separately.

For example, the terminal device may send indication information #E to the fourth network device, to indicate the fifth network device to send the first data to the first network device and send the second data to the second network device. The indication information #E, the first data, the second data, the identifier of the first network device, and the identifier of the second network device may be sent together or separately. This is not specifically limited in this application.

The foregoing implementations used by the terminal device to report the measurement data may be implemented in combination, or may be implemented independently. This is not limited in this application.

As shown in Table 1, an example in which the first network device is the source gNB and the second network device is the neighboring gNB is used for description. It is assumed that configuration information indicates measurement requirements of the source gNB and the neighboring gNB for AI model training. After receiving the configuration information delivered by the source gNB, the terminal device may separately perform encapsulation based on sources of the configuration information when the measurement requirements of the source gNB and the neighboring gNB are both completed, and respectively report the measurement data #1 and the measurement data #2 to the sources of the corresponding configuration information, for example, the source gNB and the neighboring gNB. Alternatively, the terminal device sends the measurement data #1, the measurement data #2, and identifiers of the source gNB and the neighboring gNB to a gNB (referred to as a gNB #1 below) currently accessed by the terminal device in a manner of a container and an identifier of a network device that receives the measurement data. The gNB #1 separately encapsulates the measurement data #1 and the measurement data #2 in the container, and forwards the measurement data #1 and the measurement data #2 to the corresponding source gNB and neighboring gNB. Alternatively, after receiving the configuration information delivered by the first network device, the terminal device may first complete the measurement requirement of the source gNB, and report the measurement data #1 to the corresponding source gNB, or send the measurement data #1 and the identifier of the source gNB to the gNB #1, and the gNB #1 forwards the measurement data #1 to the corresponding source gNB. Then, the terminal device completes the measurement requirement of the neighboring gNB, and reports the measurement data #2 to the corresponding neighboring gNB, or sends the measurement data #2 and the identifier of the neighboring gNB to the gNB #1, and the gNB #1 forwards the measurement data #2 to the corresponding neighboring gNB, and the like.

S440: The first network device trains the AI model based on the measurement data.

A specific implementation process of how the first network device trains the AI model based on the measurement data is not limited in this application. For example, in a scenario in which the AI model works on the first network device side, a BME application scenario is used as an example. It is assumed that an antenna form of the first network device is 64TRX. The first network device may indicate the terminal device to collect measurement information of another cell whose antenna form is also 64TRX, for example, collect signal measurement data such as an optimal beam obtained by the terminal device through measurement and corresponding RSRP, to train, for a local AI model of the first network device based on the received measurement data reported by the terminal device, a model function of predicting the optimal beam.

According to the technical solution provided in this application, the first network device may determine the configuration information and send the configuration information to the terminal device based on the optimization requirement for training the AI model of the second network device, so that the terminal device performs effective measurement. This avoids a case in which the terminal device occupies too much storage space due to data measurement, and avoids a case in which model training cannot be effectively completed due to a data loss. In this way, model optimization effect is improved.

FIG. 5 is a schematic flowchart of a communication method 500 according to an embodiment of this application. Different from that the method 400, a target scenario of this solution is that an AI model works on a terminal device side, and a first network device delivers the AI model to the terminal device, and indicates a measurement requirement for AI model training, so that the terminal device completes training of the AI model by reasonably collecting data, and reports a trained AI model to the first network device. The method procedure in FIG. 5 may be performed by the terminal device and the first network device, or may be performed by a module and/or a component (for example, a chip or an integrated circuit) that are installed on the terminal device and the first network device and that have a corresponding function. This is not limited in this application.

It should be understood that the embodiment shown in FIG. 5 and the embodiment shown in FIG. 4 may be coupled to each other, and may be mutually referenced. Although execution bodies of the two embodiments are different, a same or similar technical means may exist in the two embodiments, and content that has been described in the embodiment shown in FIG. 4 is not described again. The following uses the terminal device and the first network device as execution bodies for description, and a plurality of steps in the following are included.

S510: The first network device sends the configuration information and the AI model to the terminal device.

Correspondingly, the terminal device receives the configuration information and the AI model from the first network device.

The configuration information is determined based on an optimization requirement for training an AI model of a second network device.

Optionally, the configuration information and the AI model may be sent simultaneously, or may be sent separately.

Optionally, the AI model may be represented by using an identifier of the AI model, or may be represented by using a function identifier corresponding to the AI model.

In an implementation, the configuration information includes an expected measurement area range.

In an implementation, the configuration information further includes at least one of the following:
(1) Range information of a network device that receives related information of a trained AI model.

For example, the range information of the network device that receives the related information of the trained AI model may include cell list information, network device list information, or the like; a network device that manages a cell indicated in the cell list information or a network device indicated in the network device list information may receive the related information of the trained AI model.

For example, the related information of the AI model may include but is not limited to ontology data of the AI model, architecture information of the AI model, and identification information of the AI model, or may be other information of the AI model. Any information that can enable the first network device to restore the trained AI model falls within the protection scope of the related information provided in this embodiment of this application; for example, the ontology data of the AI model may be understood as data constituting the AI model, or data corresponding to the AI model, or the AI model; an architecture of the AI model may include a fully connected architecture, a neural network architecture, and the like; and the identification information of the AI model may be represented by a model identifier or a function identifier.
(2) Engineering parameter configuration of the target cell
(3) Expected data type
(4) Measurement precision

For specific meanings or content of the parameters in the configuration information, refer to related descriptions of step S410 in the method 400. For brevity, details are not described herein again.

The following uses a BME application scenario of as an example to describe, with reference to Table 3, the configuration information sent by the first network device. It should be understood that Table 3 is merely an example provided for ease of understanding, and should not constitute any limitation on this application. Table 3 may have another conversion. This is not limited in this application.

**Table 3**

| Expected measurement area range | Engineering parameter configuration of the target cell | Expected data type | Measurement precision | Identifier of an AI model |
|---|---|---|---|---|
| CGI 1 | Configuration A | XX beam RSRP+speed | 0.1 m/s | Model XX |
| CGI 2 | Configuration B | YY beam RSRP+direction | 0.01 dB | Model YY |
| PLMN | | Other model-related parameters/information | | |

Each piece of information in the configuration information in the example in Table 3 may be a specific parameter value, or may be a coding value agreed on in advance by the first network device and the terminal device. Content and an expression form of the configuration information are not limited in this embodiment of this application.

For example, as shown in Table 3, when the configuration information indicates that the terminal device enters a cell corresponding to the CGI 1, an engineering parameter configuration of a corresponding target cell is the configuration A, and an expected data type includes RSRP of XX (for example, XX=20) beams and a movement speed of the terminal device. The configuration information may further indicate measurement precision. For example, measurement precision of RSRP of a beam is 0.01 dB, and the measurement precision of the movement speed of the terminal device is 0.1 m/s. The configuration information may further indicate that an AI model that is expected to be trained by using the collected measurement data is the Model XX.

For example, as shown in Table 3, when the configuration information indicates that the terminal device enters a cell corresponding to the CGI 2, an engineering parameter configuration of a corresponding target cell is the configuration B, and an expected data type includes RSRP of YY (for example, YY=10) beams and a direction of the terminal device. The configuration information may further indicate measurement precision. For example, measurement precision of RSRP of a beam is 0.01 dB, and the movement direction of the terminal device is a northwest direction. The configuration information may further indicate that an AI model that is expected to be trained by using the collected measurement data is the Model YY.

Optionally, the first network device sends indication information #1 to the terminal device. Correspondingly, the terminal device receives the indication information #1 from the first network device. The indication information #1 indicates the terminal device to perform measurement in any one of the following manners: MDT measurement, MRO report measurement, or RRM measurement. The indication information #1 and the configuration information in step S510 may be sent to the terminal device together or separately. Alternatively, the indication information #1 may be carried in the configuration information and sent to the terminal device. This is not limited in this application.

In an implementation, the first network device sends indication information #2 (namely, first indication information) to the terminal device. Correspondingly, the terminal device receives the indication information #2 from the first network device. The indication information #2 indicates a condition for determining that training of the AI model is completed.

For example, the condition for determining that training of the AI model is completed includes: whether accuracy or precision reaches a first threshold in an actual use process of the AI model, for example, in a scenario like energy saving, load balancing, mobility optimization, CSI-RS feedback enhancement, BME, and positioning enhancement, where the first threshold may be configured or preconfigured on a network side. For example, when a network device indicates that the AI model training accuracy and/or precision reaches 90%, it may be considered that training of the AI model is completed.

In an implementation, the terminal device may determine by itself the condition for determining that training of the AI model is completed, for example, based on a model-related determining criterion. For example, when accuracy and/or precision of the AI model reaches a threshold, it may be determined that training of the AI model is completed. Alternatively, the terminal device may determine, based on a determining criterion related to specific performance of an application scenario of the AI model. For example, when a throughput, an access delay, or positioning precision of the terminal device reaches a threshold, it may be determined that training of the AI model is completed.

The accuracy indicates an accuracy degree of model prediction. For example, obtained accuracy of optimal beam prediction reaches more than 98%, where 98% indicates the accuracy. The precision indicates a precision degree of a model prediction result. For example, precision of position prediction of the terminal device reaches 0.1 m, where 0.1 m represents the precision.

In an implementation, the first network device sends indication information #3 (namely, second indication information) to the terminal device. Correspondingly, the terminal device receives the indication information #3 from the first network device. The indication information #3 indicates the terminal device to report the trained AI model to the first network device, and the indication information #3 includes an identifier of a target cell or an identifier of a target network. For meanings of the target cell and the target network, refer to related descriptions of the method 400.

The indication information #3 and the configuration information and the AI model in step S510 may be sent to the terminal device together or separately. The indication information #3 may be carried in the configuration information, as shown in Table 3. For example, when the indication information #3 indicates the CGI 2, the terminal device subsequently reports the trained AI model to the first network device by using the cell indicated by the CGI 2. For another example, when the indication information #3 indicates the PLMN #2, the terminal device subsequently reports the trained AI model to the first network device by using the PLMN #2 or a cell in a range of the PLMN #2, to ensure that the AI model trained by the terminal device can be successfully sent to the first network device, so as to avoid leakage of the AI model.

S520: The terminal device performs measurement based on the configuration information, to obtain measurement data associated with the AI model.

For example, the terminal device sequentially measures, based on the received configuration information, as shown in Table 3, data types corresponding to the CG1, the CG2, and the PLMN based on measurement precision.

S530: The terminal device trains the AI model based on the measurement data.

For a specific implementation process in which the terminal device trains the AI model based on the measurement data, refer to related descriptions in the conventional technology. For example, in a scenario in which the AI model works on a terminal device side, a BME application scenario is used as an example. It is assumed that an antenna form of the first network device is 64TRX. The first network device may indicate the terminal device to collect measurement information of another cell whose antenna form is also 64TRX, for example, collect signal measurement data such as an optimal beam and corresponding RSRP, to train, for a local AI model of the terminal device based on the measurement data obtained by the terminal device, a model function of predicting the optimal beam.

In an implementation, the terminal device determines whether training of the AI model is completed.

For example, in step S510, the indication information #2 received by the terminal device indicates that when accuracy of training of the AI model reaches 90%, it may be considered that training of the AI model is completed. For example, when accuracy of position measurement of the terminal device by using the trained AI model reaches 95%, it indicates that training of the AI model is completed.

For example, the terminal device may determine by itself a condition for determining that training of the AI model is completed. For example, the terminal device uses, as a condition for determining whether training of the AI model succeeds, whether accuracy or precision of the trained AI model exceeds a preset threshold. It is assumed that the preset threshold is accuracy of 90%. When accuracy of obtained optimal beam prediction reaches more than 98%, it indicates that training of the AI model is completed; or when the accuracy of position prediction of the terminal device reaches 0.1 m, it indicates that training of the AI model is completed.

Based on completion of training of the AI model, the terminal device reports information about the trained AI model to the first network device, that is, performs the following step S540.

S540: The terminal device sends related information of the trained AI model to the first network device.

Correspondingly, the first network device receives the related information of the trained AI model from the terminal device.

For a meaning or content of the related information of the trained AI model, refer to related descriptions in step S510. In addition, the first network device may determine, based on the related information of the AI model, the AI model trained by the terminal device. For example, when accuracy and/or precision of the trained model reported by the terminal device is high, a local model on the first network device side may be overwritten and replaced. In this case, the first network device may replace a related parameter of the local model with the received related information of the trained AI model.

According to the technical solution provided in this application, the first network device may determine the configuration information and send the configuration information to the terminal device based on the optimization requirement for training the AI model of the second network device, so that the terminal device performs effective measurement. This avoids a case in which the terminal device occupies too much storage space due to data measurement, and avoids a case in which model training cannot be effectively completed due to a data loss. In this way, model optimization effect is ensured.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

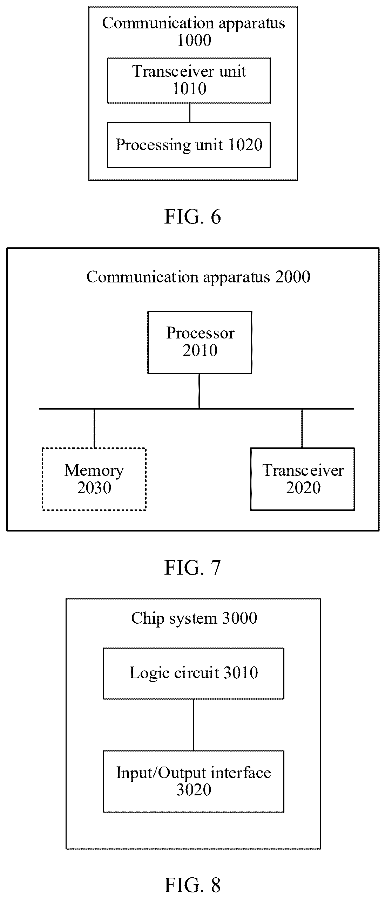

FIG. 6 is a schematic block diagram of a communication apparatus 1000 according to an embodiment of this application. As shown in FIG. 6, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a sending/receiving unit.

In a possible design, the apparatus 1000 may implement steps or procedures performed by the terminal device in the foregoing method embodiments. The processing unit 1020 is configured to perform an operation related to processing of the terminal device in the foregoing method embodiments. The transceiver unit 1010 is configured to perform operations related to sending and receiving of the terminal device in the foregoing method embodiments.

For example, the transceiver unit 1010 is configured to receive configuration information from a first network device, where the configuration information is determined based on an optimization requirement for training an AI model of a second network device. The processing unit 1020 is configured to perform measurement based on the configuration information, to obtain measurement data associated with an AI model, where the measurement data is used to train the AI model. The transceiver unit 1010 is further configured to send the measurement data.

For example, the transceiver unit 1010 is configured to receive an AI model and configuration information from a first network device, where the configuration information is determined based on an optimization requirement of an AI model of a second network device. The processing unit 1020 is configured to perform measurement based on the configuration information, to obtain measurement data associated with the AI model. The processing unit 1020 is further configured to train the AI model based on the measurement data. The transceiver unit 1010 is further configured to send related information of a trained AI model to the first network device.

In another possible design, the apparatus 1000 may implement steps or procedures performed by the first network device (for example, the source gNB) in the foregoing method embodiments. The processing unit 1020 is configured to perform an operation related to processing of the first network device in the foregoing method embodiments. The transceiver unit 1010 is configured to perform operations related to sending and receiving of the first network device in the foregoing method embodiments.

For example, the transceiver unit 1010 is configured to send configuration information to the terminal device, where the configuration information is determined based on an optimization requirement for training of a first AI model of a second network device, and the configuration information indicates the terminal device to perform measurement to obtain measurement data associated with the first AI model. The transceiver unit 1010 is further configured to receive the measurement data from the terminal device. The processing unit 1020 is configured to train the AI model based on the measurement data.

For example, the transceiver unit 1010 is configured to send an AI model and configuration information to the terminal device, where the configuration information is determined based on an optimization requirement of an AI model of a second network device, and the configuration information indicates the terminal device to perform measurement to obtain measurement data associated with the AI model. The transceiver unit 1010 is further configured to receive related information of a trained AI model from the terminal device, where the trained AI model is obtained by training the AI model based on the measurement data.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform procedures and/or steps corresponding to the transmit end in the foregoing method embodiments; or the device 1000 may be specifically a receive end in the foregoing embodiments, and may be configured to perform procedures and/or steps corresponding to the receive end in the foregoing method embodiments. To avoid repetition, details are not described herein again.

The device 1000 in the foregoing solutions has a function of implementing corresponding steps performed by the transmit end in the foregoing methods. Alternatively, the device 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 6 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 7 is a schematic block diagram of a communication apparatus 2000 according to an embodiment of this application. As shown in FIG. 7, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the terminal device in the foregoing method embodiments.

For example, the transceiver 2020 is configured to receive configuration information from a first network device, where the configuration information is determined based on an optimization requirement for training anAI model of a second network device. The processor 2010 is configured to perform measurement based on the configuration information, to obtain measurement data associated with the AI model, where the measurement data is used to train an AI model. The transceiver 2020 is further configured to send the measurement data to the first network device.

For example, the transceiver 2020 is configured to receive an AI model and configuration information from a first network device, where the configuration information is determined based on an optimization requirement of an AI model of a second network device. The processor 2010 is configured to perform measurement based on the configuration information, to obtain measurement data associated with the AI model. The processor 2010 is further configured to train the AI model based on the measurement data. The transceiver 2020 is further configured to send related information of a trained AI model to the first network device.

In another possible implementation, the apparatus 2000 is configured to implement procedures and steps corresponding to the first network device (for example, the gNB) in the foregoing method embodiments.

For example, the transceiver 2020 is configured to send configuration information to the terminal device, where the configuration information is determined based on an optimization requirement for training of a first AI model of a second network device, and the configuration information indicates the terminal device to perform measurement to obtain measurement data associated with the first AI model. The transceiver 2020 is further configured to receive the measurement data from the terminal device. The processor 2010 is configured to train the AI model based on the measurement data.

For example, the transceiver 2020 is configured to send an AI model and configuration information to the terminal device, where the configuration information is determined based on an optimization requirement of an AI model of a second network device, and the configuration information indicates the terminal device to perform measurement to obtain measurement data associated with the AI model. The transceiver 2020 is further configured to receive related information of a trained AI model from the terminal device, where the trained AI model is obtained by training the AI model based on the measurement data.

It should be understood that the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a nonvolatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. It is illustrated by way of example but not limitation that many forms of RAMs such as a static random access memory (static RAM, SRAM), a dynamic random access memory (dynamic RAM, DRAM), and a synchronous dynamic random access memory (synchronous DRAM, SDRAM), are available. It should be noted that the memory of the systems and methods described in this specification includes but is not limited to these and any memory of another proper type.

FIG. 8 is a block diagram of a chip system 3000 according to an embodiment of this application. As shown in FIG. 8, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by a terminal device in the foregoing method embodiments.

For example, the logic circuit 3010 is configured to implement operations related to processing performed by the terminal device in the foregoing method embodiments, for example, operations related to processing performed by the terminal device in the embodiment shown in FIG. 4 or FIG. 5. The input/output interface 3020 is configured to implement operations related to sending and/or receiving performed by the terminal device in the foregoing method embodiments, for example, operations related to sending and/or receiving performed by the terminal device in the embodiment shown in FIG. 4 or FIG. 5.

An embodiment of this application further provides a computer-readable storage medium. The computer-readable storage medium stores computer instructions used to implement all or some of the steps of the methods performed by the terminal device or the first network device in the foregoing method embodiments. The storage medium in this application includes any medium that can store program code, for example, a USB flash disk, a removable hard disk, a read-only memory, a random access memory, a magnetic disk, or an optical disc.

An embodiment of this application further provides a computer program product, including instructions. When the instructions are executed by a computer, the methods performed by the terminal device and the first network device in the foregoing method embodiments are implemented.

An embodiment of this application further provides a communication system. The communication system includes the first network device and the second network device in the foregoing embodiments. Optionally, the communication system includes the terminal device in the foregoing embodiments.

For explanations and beneficial effect of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the foregoing units is only logical function division. In actual implementation, there may be another division manner. For example, a plurality of units or components can be combined or integrated into another system, or some features can be ignored, or not implemented. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual conditions to achieve the objectives of the solutions in embodiments.

In addition, functional units in embodiments of this application may be integrated into one processing unit, each of the units may exist alone physically, or two or more units may be integrated into one unit.

## Claims

1. A communication method, wherein the method is applied to a terminal device, and the method comprises:
receiving configuration information from a first network device, wherein the configuration information is determined based on an optimization requirement for training an artificial intelligence AI model of a second network device;
performing measurement based on the configuration information, to obtain measurement data associated with the AI model, wherein the measurement data is used to train the AI model; and
sending the measurement data.

2. The method according to claim 1, wherein the configuration information comprises an expected measurement area range.

3. The method according to claim 2, wherein the configuration information further comprises at least one of the following:
range information of a network device receiving the measurement data, an engineering parameter configuration of a target cell, an expected data type, measurement precision, or a source of the configuration information.

4. The method according to any one of claims 1 to 3, wherein the method further comprises:
receiving indication information from the first network device, wherein the indication information indicates the terminal device to report the measurement data through a target cell, and the indication information comprises an identifier of the target cell; or
the indication information indicates the terminal device to report the measurement data through a target network, and the indication information comprises an identifier of the target network.

5. The method according to any one of claims 1 to 4, wherein sending the measurement data comprises:
when the source of the configuration information is the first network device, sending an identifier of the first network device and the measurement data to a third network device, to indicate the third network device to forward the measurement data to the first network device.

6. The method according to any one of claims 1 to 5, wherein sending the measurement data comprises:
when the source of the configuration information is the second network device, sending an identifier of the second network device and the measurement data to a fourth network device, to indicate the fourth network device to forward the measurement data to the second network device.

7. The method according to any one of claims 1 to 6, wherein sending the measurement data comprises:
sending the measurement data, the identifier of the first network device, and the identifier of the second network device to a fifth network device, wherein the measurement data comprises first data and second data, to indicate the fifth network device to forward the first data to the first network device and forward the second data to the second network device.

8. A communication method, wherein the method is applied to a first network device, and the method comprises:
sending configuration information to a terminal device, wherein the configuration information is determined based on an optimization requirement for training a first artificial intelligence AI model of a second network device, and the configuration information indicates the terminal device to perform measurement, to obtain measurement data associated with the first AI model;
receiving the measurement data from the terminal device; and
training the first AI model based on the measurement data.

9. The method according to claim 8, wherein the configuration information comprises an expected measurement area range.

10. The method according to claim 9, wherein the configuration information further comprises at least one of the following:
range information of a network device that receives the measurement data, an engineering parameter configuration of a target cell, an expected data type, measurement precision, or a source of the configuration information.

11. The method according to any one of claims 8 to 10, wherein the method further comprises:
sending indication information to the terminal device, wherein the indication information indicates the terminal device to report the measurement data through a target cell, and the indication information comprises an identifier of the target cell; or
the indication information indicates the terminal device to report the measurement data through a target network, and the indication information comprises an identifier of the target network.

12. The method according to any one of claims 8 to 12, wherein the method further comprises:
receiving a first measurement configuration from a second network device, wherein the first measurement configuration is used to obtain the measurement data for training the first AI model; and
determining the configuration information based on the first measurement configuration.

13. The method according to claim 12, wherein the first measurement configuration comprises a measurement area range expected by the second network device.

14. The method according to claim 13, wherein the first measurement configuration further comprises at least one of the following:
identification information of the first AI model, a data type expected by the second network device, or a quantity of terminal devices expected by the second network device.

15. The method according to any one of claims 8 to 14, wherein the method further comprises:
sending a second measurement configuration to a second network device, wherein the second measurement configuration is used to obtain data for training a second AI model.

16. The method according to claim 15, wherein the second measurement configuration comprises a measurement area range expected by the first network device.

17. The method according to claim 16, wherein the second measurement configuration further comprises at least one of the following:
an identifier of the second AI model, a data type expected by the first network device, or a quantity of terminal devices expected by the first network device.

18. A communication method, wherein the method is applied to a terminal device, and the method comprises:
receiving an artificial intelligence AI model and configuration information from a first network device, wherein the configuration information is determined based on an optimization requirement for training the AI model of a second network device;
performing measurement based on the configuration information, to obtain measurement data associated with the AI model;
training the AI model based on the measurement data; and
sending related information of a trained AI model to the first network device.

19. The method according to claim 18, wherein the configuration information comprises an expected measurement area range.

20. The method according to claim 19, wherein the configuration information further comprises at least one of the following:
an engineering parameter configuration of the target cell, an expected data type, range information of a network device that receives the related information of the trained AI model, or measurement precision.

21. The method according to any one of claims 18 to 20, wherein the method further comprises:
receiving first indication information from the first network device, wherein the first indication information indicates a condition for determining that training of the AI model is completed.

22. The method according to any one of claims 18 to 21, wherein the method further comprises:
receiving second indication information from the first network device, wherein the second indication information indicates the terminal device to report the related information of the trained AI model to the first network device, and the second indication information comprises at least one of the following: an identifier of a target cell or an identifier of a target network.

23. A communication method, wherein the method is applied to a first network device, and the method comprises:
sending an artificial intelligence AI model and configuration information to a terminal device, wherein the configuration information is determined based on an optimization requirement for training the AI model of a second network device, and the configuration information indicates the terminal device to perform measurement, to obtain measurement data associated with the AI model; and
receiving related information of a trained AI model from the terminal device, wherein the trained AI model is obtained by training the AI model based on the measurement data.

24. The method according to claim 23, wherein the configuration information comprises an expected measurement area range.

25. The method according to claim 24, wherein the configuration information comprises at least one of the following:
range information of a network device that receives the related information of the trained AI model, an engineering parameter configuration of a target cell, an expected data type, or measurement precision.

26. The method according to any one of claims 23 to 25, wherein the method further comprises:
sending first indication information to the terminal device, wherein the first indication information indicates a condition for determining that training of the AI model is completed.

27. The method according to any one of claims 23 to 26, wherein the method further comprises:
sending second indication information to the terminal device, wherein the second indication information indicates the terminal device to report the related information of the trained AI model to the first network device, and the second indication information comprises at least one of the following: an identifier of a target cell or an identifier of a target network.

28. A communication apparatus, comprising a module or unit configured to perform the method according to any one of claims 1 to 7 or claims 18 to 22.

29. A communication apparatus, comprising a module or unit configured to perform the method according to any one of claims 8 to 17 or claims 23 to 27.

30. A communication apparatus, wherein the apparatus comprises a processor, the processor is coupled to a memory, and the memory stores instructions; and when the instructions are run by the processor, the processor is enabled to perform the method according to any one of claims 1 to 17.

31. A communication apparatus, wherein the apparatus comprises a processor, the processor is coupled to a memory, and the memory stores instructions; and when the instructions are run by the processor, the processor is enabled to perform the method according to any one of claims 18 to 27.

32. A communication system, comprising a first network device and a second network device, wherein the first network device is configured to perform the method according to any one of claims 8 to 17 or claims 23 to 27.

33. A computer-readable storage medium, wherein the computer-readable storage medium is configured to store a computer program, and when the computer program is run on a computer, the computer is enabled to perform the method according to any one of claims 1 to 17 or claims 18 to 27.
